# EUROPEAN PATENT APPLICATION

(11) **EP 3 795 540 A1**
(43) Date of publication of application: **24.03.2021**
(21) Application number: 19804259.0
(22) Date of filing: 15.05.2019
(51) Int. Cl.: C01B 33/03, H01M 4/38

(54) **SILICON FINE PARTICLES AND METHOD FOR PRODUCING SAME**

(30) Priority: 18.05.2018 JP 2018096067
(71) Applicant: Tokuyama Corporation, Shunan-shi, Yamaguchi 745-8648 (JP)
(72) Inventor: MOCHIZUKI Naoto, Shunan-shi, Yamaguchi 745-8648 (JP); ISHIDA Haruyuki, Shunan-shi, Yamaguchi 745-8648 (JP); ARIYUKI Masao, Shunan-shi, Yamaguchi 745-8648 (JP); FUKUHARA Koji, Shunan-shi, Yamaguchi 745-8648 (JP)
(74) Representative: Dehns
(86) International application number: PCT/JP2019/019233
(87) International publication number: WO 2019/221157

(57) **Abstract**

Provided are silicon fine particles that are effectively prevented from being oxidized and have a crystallite diameter close to that of an amorphous substance. The silicon fine particles of the present invention have an average diameter of primary particles of 30 to 900 nm, a crystallite diameter of less than 10 nm, a chlorine concentration of 1 to 10% by mass, and a ratio (Cₒ/S) of an oxygen concentration (Cₒ: % by mass) to a specific surface area (S: m²/g) of less than 0.05. The method for producing silicon fine particles of the present invention includes: heating a gas containing trichlorosilane to a temperature of 600 to 950°C in a reactor and thermally decomposing the trichlorosilane to produce a silicon fine particle precursor containing chlorine, then collecting the silicon fine particle precursor, and then heating and dechlorinating the collected silicon fine particle precursor at a temperature of 750 to 900°C under supply of an inert gas or under reduced pressure.

## Description

### Technical Field

The present invention relates to novel silicon fine particles and a method for producing the same. More specifically, the present invention provides silicon fine particles containing a small amount of chlorine, and having an oxygen amount controlled within a predetermined range, a specific primary particle diameter, and a specific crystallite diameter, and a method for producing the fine particles.

### Background Art

Currently, silicon is used for various uses including the use as an electrode material (a negative electrode material) of a lithium ion secondary battery, or the uses thereof are proposed.

Conventionally, though carbon materials such as graphite are generally used for a negative electrode material of a lithium ion battery, the theoretical capacity is as low as 372 mAh/g (when the carbon materials are lithiated to LiC₆), and a negative electrode material having a higher capacity is desired. Compared to carbon materials, silicon has a larger occlusion capacity of lithium per unit mass, has a very high theoretical capacity of 3,579 mAh/g (when silicon is lithiated to Li₁₅Si₄), and is studied as a next-generation negative electrode material.

One of the problems when silicon is used as a negative electrode material of a lithium ion secondary battery is as follows: the volume expansion when silicon is alloyed with lithium to occlude lithium is large, strain energy accumulates inside due to repeated expansion and contraction caused by charge and discharge, silicon is broken into pieces, voids are generated, and loss of electrical conductivity and ionic conductivity reduce the charge capacity of the negative electrode.

For this problem, it is known that when silicon is microparticulated, the silicon fine particles are less likely to break during expansion and contraction and durability can be improved. (Non Patent Literature 1)

Though silicon functions as a charge and discharge site that forms a weak covalent bond with lithium, oxygen impurities present as Si-O in silicon become an irreversible capacity site that forms a strong ionic bond with lithium. Thus, it is desirable that oxygen impurities in silicon be as small as possible. However, there is a problem in that an oxide layer called a natural oxide film generally exists on the surface of silicon, and thus, when the surface area is increased by microparticulation of silicon, the oxygen concentration in silicon is also increased. In particular, when silicon is microparticulated by crushing, an oxide layer on the silicon surface is thickly formed by the formation of an altered layer on the silicon surface (a site that is unstable and highly active) due to crushing energy, and the oxygen concentration is likely to increase.

It is known that in amorphous silicon, lithium is more likely to be evenly distributed than in crystalline silicon, and when amorphous silicon is alloyed with lithium, local stress is less likely to be applied during expansion and cracking is less likely to occur, resulting in increased durability. Amorphous silicon is silicon in which the crystallinity is as low as possible, and hydrogenated amorphous silicon obtained by binding hydrogen having a very small atomic radius to a part of silicon to reduce the crystallinity of silicon is most commonly known. However, the binding energy between silicon and hydrogen is relatively low and the binding is unstable, and thus when the hydrogenated amorphous silicon is used as the negative electrode material of a lithium ion battery, crystallization may occur in the process of repeated lithiation and delithiation of silicon, and the hydrogenated amorphous silicon may change to a large crystal.

As a method for producing amorphous silicon, for example, Patent Literature 1 discloses a method for production including: a) a step of supplying a silicon source gas and polysilicon silicon seed to a reaction zone; b) a step of maintaining the silicon source gas at a sufficient temperature for a sufficient residence time in the reaction zone so that the silicon source gas will reach reaction equilibrium of thermal decomposition in the reaction zone to produce elemental silicon; and c) a step of maintaining a sufficient amount of polysilicon silicon seed in the reaction zone so that elemental silicon will be vapor-deposited on the polysilicon silicon seed to produce coated particles.

Patent Literature 1 discloses that i) decomposition of at least one silicon source gas proceeds as 4HSiCl₃ ← → Si + 3SiCl₄ + 2H₂; ii) the sufficient temperature is in a temperature range of about 700°C to about 1000°C; iii) the sufficient residence time is less than about 5 seconds. However, the method of Patent Literature 1 is deficient in that when the reaction temperature is near the upper limit of the above-mentioned range, the reaction tube is clogged by the deposition of silicon, which makes continuous production difficult, and when the temperature is lowered, the silicon has a large amount of remaining chlorine, and easily reacts with moisture in the air, and is oxidized.

Patent Literature 2 discloses an aggregated crystalline silicon powder having a BET surface area of 20 to 150 m²/g, and, as a method for producing the same, a method for producing the aggregated crystalline silicon powder including heating gaseous silane, an inert gas, and hydrogen in a hot wall reactor, then cooling the reactant, and separating and recovering the powder. However, in the method for production described in Patent Literature 2, monosilane having high reactivity and explosiveness is used as the silane raw material, and thus stable production is difficult. In addition, the obtained silicon is crystalline silicon.

Patent Literature 3 discloses halogen-containing silicon in the form of powder and granules obtained by thermally decomposing halogenated polysilane. The chloride-containing silicon finally obtained in Patent Literature 3 contains a large amount of chlorine of 33% in Examples, and silicon oxidation due to the reaction between residual chlorine and moisture in the air and the like is unavoidable.

Patent Literature 4 discloses a negative electrode active material including a nanosilicon material produced by heat-treating a layered polysilane represented by Composition Formula (SiH)ₙ, and a composite metal composed of at least one metal selected from Pt, Ir, Pd, Cu, W, and Ti, and combined with Si of the nanosilicon material. The layered polysilane is prepared in an aqueous solution, and thus a hydroxyl group presumably remains. Thus, it is expected that it will be difficult to obtain silicon having a low oxygen content of an object of the present invention from the nanosilicon material obtained by using this.

As described above, silicon that is less likely to break or deform by expansion and contraction when the silicon is alloyed with lithium, and further has a low oxygen concentration and excellent oxidation resistance has not been obtained so far.

### Citation List

### Patent Literature

Patent Literature 1: JP 2012-524022 A
Patent Literature 2: JP 2007-511460 A
Patent Literature 3: JP 2011-520763 A
Patent Literature 4: JP 2014-120429 A

### Non Patent Literature

Non-Patent Literature 1: X. H. Liu et al., "Size-Dependent Fracture of Silicon Nanoparticles During Lithiation", ACSNANO Vol. 6, No. 2, pp. 1522-1531 (2012).

### Summary of Invention

### Technical Problem

Thus, an object of the present invention is to provide silicon fine particles that are less likely to break by expansion and contraction during reaction with lithium (alloying) and elimination of lithium (dealloying), further have a low oxygen concentration, and are excellent in oxidation resistance, and a method for producing the same.

### Solution to Problem

The present inventors focused on the following points to solve the above-mentioned problems.

When silicon is microparticulated, the particles are less likely to break even when expansion and contraction occur by alloying with lithium and dealloying. However, when the particle diameter is reduced, the surface per unit mass (specific surface area) increases, and the amount of oxygen impurities increases by the oxide film formed on the silicon surface.

The crystal domain (crystallite) in particles is desirably as small as possible and as close to amorphousness as possible, because expansion and contraction caused by alloying with lithium and dealloying tend to be more suppressed as the crystal domain (crystallite) in particles becomes smaller and closer to amorphousness. It is known that silicon undergoes an amorphous state in the process of alloying with lithium, and this is presumably because the volume change caused by the phase change from amorphous silicon to amorphous alloy is smaller than that caused by the phase change from crystalline silicon to amorphous alloy.

When silicon is produced by thermal decomposition of trichlorosilane,
a decomposition reaction represented by Formula (1);

4SiHCl₃ → 3SiCl₄ + Si + 2H₂ (1)

proceeds to produce silicon (Si) in a reactor.

This thermal decomposition mainly proceeds at a high temperature of 1,000°C or more, thus the produced silicon is fused to the reaction container, and as a result, collection efficiency of silicon fine particle becomes extremely low. In addition to this problem, there is a problem of an increased crystallite diameter because the silicon obtained by such a high temperature reaction undergoes crystallization in the process of cooling.

It is generally thought that chlorine remaining in silicon fine particles easily reacts with moisture, for example, in the air and causes oxidation. However, only the chlorine exposed near the particle surface is highly reactive, and the chlorine present inside particles is little reactive. When silicon fine particles contain a predetermined amount of chlorine, crystallization of silicon can be inhibited, the crystallite diameter can be kept small, and
expansion during lithium alloying can be suppressed.

The binding energy of this remaining chlorine, that is, the Si-Cl bond (386 kJ/mol) is larger and more stable than that of the Si-H bond (316 kJ/mol). In addition, chlorine has a larger atomic radius than hydrogen, and thus, the Si atom density per unit volume can be reduced. Thus, inclusion of chlorine is more chemically stable than hydrogenation, which is generally known as a method for amorphization of silicon, and has a higher effect of suppressing expansion during lithium alloying.

In view of the above-mentioned focus points, the present inventors have further conducted extensive studies, thereby completing the following present invention.

The silicon fine particles according to the present invention have
an average diameter of primary particles of 30 to 900 nm,
a crystallite diameter of less than 10 nm,
a chlorine concentration of 1 to 10% by mass, and
a ratio (Cₒ/S) of an oxygen concentration (Cₒ: % by mass) to a specific surface area (S: m²/g) of less than 0.05.

The present invention also provides a suitable production method for producing the silicon fine particles.

That is, the method for production according to the present invention includes: heating a gas containing trichlorosilane to a temperature of 600 to 950°C in a reactor and thermally decomposing the trichlorosilane to produce a silicon fine particle precursor containing chlorine, then collecting the silicon fine particle precursor, and then heating and dechlorinating the collected silicon fine particle precursor at a temperature of 750 to 900°C under supply of an inert gas or under reduced pressure.

Further, in a preferred embodiment, unreacted trichlorosilane and silicon tetrachloride are recovered from a reaction exhaust gas, the silicon tetrachloride is reacted with metallic silicon and hydrogen to be converted into trichlorosilane, and used as a reaction raw material.

In a preferred embodiment, when a silicon fine particle precursor is collected, unreacted trichlorosilane is separated and recovered from a separated reaction exhaust gas by distillation, and used as a reaction raw material.

### Advantageous Effects of Invention

The silicon fine particles of the present invention have a primary particle diameter and a crystallite diameter within a predetermined range. Thus, when the silicon fine particles are used as a negative electrode material of a lithium ion battery, the silicon fine particles are less likely to break even when expansion and contraction are repeated by alloying with lithium and dealloying during charge and discharge. The specific surface area and the amount of oxygen are defined, and thus the irreversible reaction of lithium due to oxygen impurities is less. In addition, the silicon fine particles contain chlorine in a predetermined range, and thus low crystallinity is maintained and the volume change is small.

By employing a two-step heating step including a thermal decomposition step of trichlorosilane and a dechlorination step of the obtained silicon fine particle precursor as the method for production of the present invention, the silicon fine particles having the above-mentioned characteristics can be efficiently produced.

When such silicon fine particles of the present invention are used as a negative electrode material of a lithium ion battery, in the repeated alloying and dealloying of silicon that occur with the absorption and release of lithium, performance deterioration due to the destruction of the electrode structure caused by expansion and contraction of particles and due to the loss of the conductive path caused by breakage of particles is less likely to occur, and thus stable performance is expected to be exhibited for a long time.

The silicon fine particles of the present invention can be used as an active material for a negative electrode of a lithium ion secondary battery including a solid-state battery and a battery in which a gel electrolyte is used in a form of a composite obtained by mixing the silicon fine particles with known negative electrode materials such as carbon materials such as graphite, silicon oxide, tin, antimony, magnesium, and bismuth, or in a simple substance of silicon.

### Brief Description of Drawings

Fig. 1 shows a scanning electron micrograph of silicon fine particles of the present invention.
Fig. 2 schematically shows the process for producing silicon fine particles of the present invention.

### Description of Embodiments

Hereinafter, though embodiments of the present invention will be described, the present invention is not limited to these descriptions.

### <Silicon fine particles>

The silicon fine particles of the present invention have an average diameter of primary particles of 30 to 900 nm, preferably have an average diameter of primary particles of 60 to 500 nm, and more preferably have an average diameter of primary particles of 80 to 250 nm. Usually, when silicon fine particles are used as a negative electrode material, alloying proceeds from the outer shell of the particles when silicon fine particles are alloyed with lithium. As alloying proceeds, a core-shell structure composed of silicon of the core and an alloy layer of the shell is formed, and the volume expansion of the alloy layer of the shell proceeds while the silicon of the core is used for alloying and becomes small. The lithium alloy of the shell has a larger volume than the silicon of the core, and thus when the diameter of the silicon fine particles is large, cracks occur at the expanded shell and the interface between the core and the shell. These cracks cause breaking of the particles themselves during repeated charge and discharge, and the loss of ionic and electrical conduction paths at the breaking surface increases the proportion of silicon that cannot react with lithium, which causes a decrease in charge and discharge efficiency. Meanwhile, in the present invention, the average particle diameter is adjusted within a predetermined range, and thus even when the volume expansion due to alloying proceeds, alloying is completed before cracks occur, and the silicon fine particles are less likely to break.

The crystallite diameter of the silicon fine particles is less than 10 nm, and is preferably in a range of 3 to 8 nm. The crystallite that forms such silicon fine particles are not particularly limited, and can be polycrystalline or amorphous, or can be a mixed form of these two states.

When silicon and lithium are alloyed, silicon is amorphous alloyed by the insertion of lithium ions. Though the expansion at the time of the structural change from crystalline silicon to amorphous silicon is very large, in the present invention, the silicon has a small crystallite diameter and is close to amorphousness in advance, and thus, the expansion due to the structural change can be reduced and the influence by the volume expansion can be more suppressed.

The ratio (Cₒ/S) of an oxygen concentration (Cₒ: % by mass) to a specific surface area (S: m²/g) of silicon fine particles is less than 0.05, more preferably less than 0.04, and further preferably less than 0.03. The concentration of oxygen in silicon mainly depends on the surface oxide layer on the surface of the silicon fine particles, and thus when the particle diameter of the silicon fine particles decreases, the specific surface area increases and the concentration of oxygen increases. Thus, it is difficult to separately define the specific surface area and the concentration of oxygen. Thus, in the present invention, the ratio (Cₒ/S) defines a range in which the influence of oxygen impurities in silicon is small. Oxygen impurities in silicon irreversibly bind to lithium and cause an irreversible capacity in charge and discharge cycles. However, by adjusting the ratio (Cₒ/S) to a predetermined ratio of the present invention, the influence of oxygen can be suppressed to an extremely small level.

The silicon fine particles have a chlorine concentration in a range of 1 to 10% by mass, and preferably have a chlorine concentration in a range of 3 to 7% by mass. Inclusion of chlorine in a predetermined range has an effect of suppressing the increase in the crystallite diameter of silicon and suppressing the expansion when lithium and silicon are alloyed. When the amount of chlorine is too small, the effect of inclusion of chlorine is weakened and the suppressing effect of expansion is not obtained. When the amount of chlorine is too large, the highly reactive chlorine remaining on the surface of particles may react with moisture in the air to increase oxygen impurities, or may react with other battery materials to form chlorides.

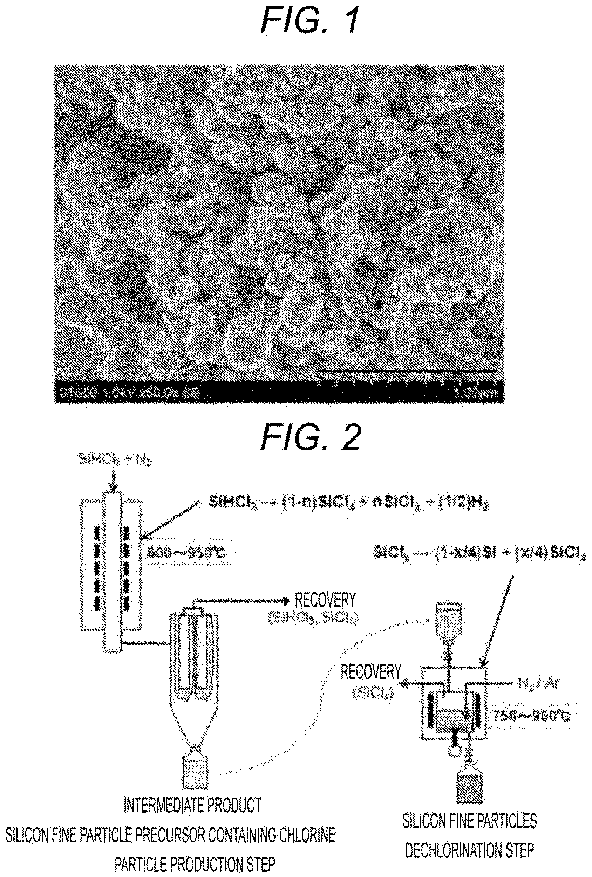

A scanning electron micrograph of such silicon fine particles of the present invention is shown in Fig. 1.

In Fig. 1, though multiple spherical fine particles of about 50 to 300 nm are connected in a string of beads, the present invention is not limited to this and can be monodisperse fine particles in which each fine particle is not connected.

### <Method for producing silicon fine particles>

The present invention also provides a suitable production method for producing the silicon fine particles.

That is, the method for production of the present invention includes a thermal decomposition step of thermally decomposing trichlorosilane to produce a silicon fine particle precursor containing chlorine in a reactor; and a dechlorination step of heating and dechlorinating the collected silicon fine particle precursor containing chlorine.

### . Thermal decomposition step

In the present invention, as a Si source, trichlorosilane is used as a main component. As a Si source other than trichlorosilane, dichlorosilane, silicon tetrachloride and the like can be contained. When these are contained, these are preferably used in an amount of 30 mol% or less in the total moles of the Si source.

To a reaction container, a gas essentially inert to the reaction of the method for production of the present invention, such as nitrogen, argon, and helium, can be introduced together with the Si source as an entrained gas. Though trichlorosilane, which is a main Si source, has a high boiling point of about 32°C and is easily liquefied, by being mixed with an entrained gas, trichlorosilane is maintained in a gas state and can be easily supplied in a fixed amount. The amount of the entrained gas is not particularly limited, and the entrained gas is preferably used in a range of 5 to 80% by volume relative to trichlorosilane to stabilize the vaporization of trichlorosilane. By appropriately satisfying the vaporization condition and heating the gas pipe, industrially, it is not necessary to use an entrained gas.

In the thermal decomposition step in the present invention, trichlorosilane thermally decomposes to produce an intermediate product SiClₓ (x is generally 0.1 to 0.3) as a silicon fine particle precursor containing chlorine as described below. A representative reaction in this thermal decomposition step is represented by Formula (2) below:

SiHCl₃ → (1-n)SiCl₄ + nSiClₓ + (1/2)H₂ (2)

By-products include, in addition to silicon tetrachloride, dichlorosilane and polymeric silane.

In the thermal decomposition step, the Si source is heated to a temperature of 600 to 950°C, preferably heated to a temperature of 650 to 900°C, and more preferably heated to a temperature of 700 to 850°C. The heating temperature is important to produce a silicon fine particle precursor containing chlorine. When the heating temperature is higher than the predetermined temperature, the reactant is fused to the inner wall of the reactor to block the reactor, and when the heating temperature is less than the predetermined temperature, the desired silicon fine particle precursor cannot be obtained. As the reaction container, a tubular reaction container having an inner wall made of a material such as carbon is usually used, and a heating device capable of heating the inner wall to a predetermined temperature is provided therein.

By undergoing the reaction to produce the silicon fine particle precursor containing chlorine represented by Formula (2) above, silicon fine particles having a small crystallite diameter, and containing oxygen and chlorine in amounts adjusted to a predetermined range as described above, which have not been conventionally obtained, can be obtained.

The temperature inside the reaction container is not particularly limited as long as heating in the above-mentioned range can be performed, and the temperature can be changed stepwise. The gas flow rate and the residence time of the Si source are also appropriately selected according to the size and the heat transfer area (efficiency) of the reaction container.

The Si source is preferably preheated to a temperature of 40°C or more and less than 600°C before being introduced into a reaction container, and then is desirably heated to the above-mentioned temperature. When Si source at a low-temperature is quickly heated to the above-mentioned temperature in a reaction container, the temperature of the inner wall (heating body) of the reaction container becomes high and exceeds the above-mentioned temperature, and the temperature of the Si source locally exceeds the above-mentioned temperature range near the inner wall of the reaction container, which tends to cause fusion of the reactant to the wall surface of the reaction container. By preheating, heating to the above-mentioned temperature can be performed slowly, and the temperature of the inner wall of the reaction container can be appropriately maintained within the range of the thermal decomposition temperature of the Si source. Further, the area required for preheating the Si source in the reaction container can be reduced. Further, the temperature of the Si source can be easily kept uniform, and thus the variation in the particle diameter of the obtained silicon fine particles can be suppressed.

The silicon fine particle precursor containing chlorine of the reaction product is collected and separated from hydrogen, silicon tetrachloride, nitrogen, unreacted trichlorosilane, by-product dichlorosilane, polymeric silane and the like. The collection method is not particularly limited and, for example, known methods such as a cyclone-type collection method, a bag filter, and electric dust collection can be used.

From the reaction exhaust gas from which the silicon fine particle precursor containing chlorine has been separated, unreacted trichlorosilane, silicon tetrachloride, and nitrogen gas are recovered, and the silicon tetrachloride can be reacted with metallic silicon and hydrogen to be converted into trichlorosilane, and be used as a reaction raw material again.

Separation of silanes and other gas components from the reaction exhaust gas can be performed by deep cooling or the like. The deep cooling is performed by cooling the reactant to about -30 to -50°C by a heat exchanger or the like under pressure, generally under a pressure of about 500 to 800 kPaG. By such deep cooling, trichlorosilane and silicon tetrachloride are condensed and separated from gas components such as nitrogen gas, hydrogen gas, and hydrogen chloride gas. Meanwhile, for gas components, after removal of hydrogen chloride gas in an adsorption tower filled with an adsorbent such as activated carbon, the separated and recovered nitrogen gas containing hydrogen can be reused as an entrained gas.

Trichlorosilane can be recovered from the condensate by distillation or the like and reused in the above-mentioned reaction.

The separated silicon tetrachloride is preferably reacted with hydrogen and metallic silicon (Formula (3)) to be converted into trichlorosilane, and reused as a Si source.

Si + 2H₂ + 3SiCl₄ → 4SiHCl₃ (3)

The obtained reaction product containing trichlorosilane is distilled to recover trichlorosilane, and the trichlorosilane is reused as a reaction raw material. The condensate recovered by deep cooling and the reaction product of the above-mentioned reaction can be mixed to recover trichlorosilane. In the reaction formula of Formula (3), unreacted silicon tetrachloride can be converted into trichlorosilane again by the above-mentioned reaction, and this loop can be repeated to suppress the by-product emission loss and effectively use a raw material. The distillation step can be performed in multiple stages to further purify trichlorosilane.

Meanwhile, the collected silicon fine particle precursor containing chlorine is transferred to the dechlorination step. The transfer method is not particularly limited as long as the collected silicon fine particle precursor containing chlorine does not come into contact with oxygen and moisture and there is no contamination from a container.

For example, the silicon fine particle precursor can be filled into a container made of carbon, aluminum, nickel-coated SUS or the like after replacement by nitrogen gas, and transferred to the dechlorination step. A container made of carbon is preferred because it is less affected by metal contaminants, which cause a problem particularly in use as a battery material, and is not denatured even when it is filled with particles at a high temperature. Alternatively, the silicon fine particle precursor collected by the above-mentioned known collection methods can be accumulated in a hopper or the like, entrained in a gas that does not contain oxygen or water such as nitrogen, and air transported in a pipe.

### . Dechlorination step

Then, the collected silicon fine particle precursor containing chlorine is loaded into a dechlorination reaction container and heated to a temperature of 750 to 900°C, and preferably heated to a temperature of 780 to 820°C to perform dechlorination treatment. The dechlorination treatment is performed in a dechlorination reaction container under supply of an inert gas or under reduced pressure. The inert gas supplied to the dechlorination reaction container and flowed therein is not particularly limited as long as it does not react with the silicon fine particle precursor. The inert gas is not limited as long as it does not contain the trichlorosilane, silicon tetrachloride (however, silicon tetrachloride produced by the dechlorination reaction is not included), oxygen, or water, and gases such as nitrogen, argon, and helium are preferably used. The inert gas is preferably a gas in which water content is reduced as much as possible, and particularly preferably a gas having a dew point of -50°C or less. When the treatment is performed under reduced pressure, the gas is preferably exhausted from the dechlorination reaction container so that the pressure will be 1 kPa or less.

By the dechlorination treatment, the reaction of Formula (4) proceeds, and silicon fine particles are obtained.

SiClₓ → (1-x/4) Si + (x/4) SiCl₄ (4)

In the heating for the dechlorination treatment, to uniformly heat the silicon fine particle precursor containing chlorine, the precursor is preferably heated with stirring. Stirring can be performed by any known method such as a method in which a reactor rolls, a method in which a stirring blade is provided in a reactor, and a method in which stirring is performed with an airflow. Further, a baffle plate can be provided to improve stirring efficiency.

The time to heat the silicon fine particle precursor at the predetermined heating temperature (holding time) is not particularly limited as long as the desired chlorine concentration is achieved, and is generally about 5 to 60 minutes.

The heating temperature is important for the dechlorination treatment, highly reactive chlorine near the surface of the fine particles is removed by heating within the above-mentioned temperature range, and the silicon fine particles according to the present invention are obtained. The silicon fine particles obtained after the dechlorination treatment are stable, and the quality does not change even when they are exposed to the atmosphere after cooling. Chlorine trapped in the crystal of silicon fine particles has low reactivity, and has a function of suppressing a volume change at the time of becoming amorphous when an alloy with lithium is formed. When the heating temperature of the dechlorination treatment is low, highly reactive chlorine near the surface remains and reacts with moisture in the air when it is exposed to the atmosphere, which causes oxidation of the silicon fine particles. Meanwhile, when the heating temperature is high, even chlorine having low reactivity inside the crystal is removed, crystallization proceeds, and obtaining the silicon fine particles having the crystallite diameter and the chlorine concentration of the object of the present invention becomes difficult.

Silicon tetrachloride is produced in the dechlorination reaction. When silicon tetrachloride is present in a high concentration in the atmosphere during the dechlorination reaction, the progress of Formula (4) above is inhibited. Thus, the dechlorination reaction is performed while emitting the produced silicon tetrachloride out of the system by performing the dechlorination reaction under supply of an inert gas or under reduced pressure. The recovered silicon tetrachloride can be recovered by the deep cooling separation, reacted with hydrogen and metallic silicon (Formula (3)) to be converted into trichlorosilane, and reused as a raw material for the thermal decomposition.

Silicon fine particles of the present invention obtained as described above can be suitably used as, in particular, a negative electrode material of a lithium ion secondary battery after being crushed or granulated to have any aggregation particle diameter as needed, and further uniformly dispersed in any solvent as needed.

The silicon fine particles of the present invention have a small crystallite diameter, have oxygen and chlorine in amounts adjusted to a predetermined range, thus, do not break by the volume change during occlusion of lithium ions, and are capable of forming a negative electrode that can maintain a high charge capacity for a long time. The silicon fine particles of the present invention are effectively suppressed from being rapidly oxidized, and can be handled extremely safely.

### Examples

The present invention will be described in the following Experimental Examples.

### Evaluation method of each physical property

(1) Reaction rate of trichlorosilane
   The reaction rate of trichlorosilane was calculated from the ratios of trichlorosilane, silicon tetrachloride, and dichlorosilane detected by analyzing the composition of the emission gas after reaction with a gas chromatograph.
(2) Chlorine concentration in silicon fine particle precursor and silicon fine particles
   The chlorine concentration was determined by measuring a sample by X-ray fluorescence analysis.
(3) Oxygen concentration in silicon fine particle precursor and silicon fine particles
   The oxygen concentration was determined by measuring a sample with an oxygen-nitrogen concentration analyzer (TC-600 manufactured by LECO).
(4) Specific surface area of silicon fine particle precursor and silicon fine particles
   The specific surface area was determined by measuring a sample with a specific surface area measuring device by the nitrogen gas BET adsorption method.
(5) Average diameter of silicon fine particles The average diameter was determined from the specific surface area by
   d = 6/ρ·S In the formula, d represents an average diameter, ρ represents a density of silicon, and S represents a specific surface area.
(6) Crystallite diameter of silicon fine particles The crystallite diameter was determined by analyzing the diffraction profile obtained by X-ray diffraction of a sample by Halder-Wagner method.

### Example 1

### • Synthesis of silicon fine particle precursor containing chlorine

A graphite reaction cylinder having an inner diameter of 80 mm and a length of 2500 mm was heated to 750°C, trichlorosilane and entrained nitrogen were supplied thereto at a rate of 900 g/min and at a rate of 37 NL (L represents liter)/min, respectively, to synthesize a silicon fine particle precursor, and the silicon fine particle precursor was separated from unreacted gases and collected with a bag filter. The reaction rate of trichlorosilane was about 40%, and about 70% of the produced silicon fine particle precursor was collected on the bag filter. The collected silicon fine particle precursor was accumulated in a storage container whose atmosphere has been replaced with nitrogen.

When a part of the collected silicon fine particle precursor was exposed to the atmosphere, it reacted with moisture in the air to produce white smoke composed of hydrogen chloride and oxidized. The silicon fine particle precursor after exposure to the atmosphere was analyzed, and the oxygen concentration was found to be 15.2%. The specific surface area (S) was 79 m²/g, and the ratio of oxygen concentration to specific surface area (Cₒ/S) was 0.192. The crystallite diameter was 3 nm.

### • Dechlorination of silicon fine particle precursor containing chlorine

The silicon fine particle precursor (one not exposed to the atmosphere) accumulated in the storage container was supplied to a graphite heating crucible whose atmosphere has been replaced with nitrogen while being careful to prevent the silicon fine particle precursor from coming into contact with the atmosphere. An appropriate amount of nitrogen was supplied to the inside of this graphite container, and the graphite container was heated to 800°C while flowing the nitrogen. Immediately after reaching 800°C, heating was stopped and natural cooling was performed. As a result, the duration in which the temperature was kept at 750°C or more was 5 minutes.

After cooling, the heating crucible was opened to the atmosphere, and silicon fine particles were taken out from the inside. The obtained silicon fine particles did not have an odor or the like caused by hydrogen chloride gas even when they were exposed to the atmosphere. The obtained silicon fine particles had an oxygen concentration (Cₒ) of 0.6% by mass, a chlorine concentration of 4.8% by mass, and a specific surface area (S) of 21 m²/g. The ratio of oxygen concentration to specific surface area (Cₒ/S) was 0.029. The particles had an average diameter of 123 nm and a crystallite diameter of 7 nm.

### Example 2

A silicon fine particle precursor was obtained under the same conditions as in Example 1, except that the temperature of the reaction cylinder during the synthesis of the silicon fine particle precursor was 850°C.

The obtained silicon fine particle precursor was dechlorinated under the same dechlorination conditions as in Example 1. As a result, the obtained silicon fine particles had an oxygen concentration (Cₒ) of 0.6% by mass, a chlorine concentration of 4.7% by mass, and a specific surface area (S) of 20 m²/g. The ratio of oxygen concentration to specific surface area (Cₒ/S) was 0.030. The particles had an average diameter of 129 nm and a crystallite diameter of 8 nm.

### Example 3

A silicon fine particle precursor was obtained under the same conditions as in Example 1, except that the temperature of the reaction cylinder during the synthesis of the silicon fine particle precursor was 700°C. The obtained silicon fine particle precursor was dechlorinated under the same dechlorination conditions as in Example. As a result, the obtained silicon fine particles had an oxygen concentration (Cₒ) of 0.8% by mass, a chlorine concentration of 4.8% by mass, and a specific surface area (S) of 22 m²/g. The ratio of oxygen concentration to specific surface area (Cₒ/S) was 0.036. The particles had an average diameter of 117 nm and a crystallite diameter of 7 nm.

### Example 4

The silicon fine particle precursor obtained according to the synthesis conditions of the silicon fine particle precursor in Example 1 was supplied to a graphite heating crucible whose atmosphere has been replaced with nitrogen while being careful to prevent the silicon fine particle precursor from coming into contact with the atmosphere. The graphite container was heated to 850°C while flowing an appropriate amount of nitrogen inside this graphite container. Immediately after reaching 850°C, heating was stopped and natural cooling was performed. As a result, the duration in which the temperature was kept at 750°C or more was 10 minutes.

After cooling, the heating crucible was opened to the atmosphere, and silicon fine particles were taken out from the inside. The obtained silicon fine particles had an oxygen concentration (Cₒ) of 0.6% by mass, a chlorine concentration of 3.2% by mass, and a specific surface area (S) of 19 m²/g. The ratio of oxygen concentration to specific surface area (Cₒ/S) was 0.032. The particles had an average diameter of 136 nm and a crystallite diameter of 9 nm.

### Example 5

The silicon fine particle precursor obtained according to the synthesis conditions of the silicon fine particle precursor in Example 1 was supplied to a graphite heating crucible whose atmosphere has been replaced with nitrogen while being careful to prevent the silicon fine particle precursor from coming into contact with the atmosphere. The graphite container was heated to 780°C while flowing an appropriate amount of nitrogen inside this graphite container. Immediately after reaching 780°C, heating was stopped and natural cooling was performed. As a result, the duration in which the temperature was kept at 750°C or more was 3 minutes.

After cooling, the heating crucible was opened to the atmosphere, and silicon fine particles were taken out from the inside. The obtained silicon fine particles had an oxygen concentration (Cₒ) of 1.0% by mass, a chlorine concentration of 4.8% by mass, and a specific surface area (S) of 22 m²/g. The ratio of oxygen concentration to specific surface area (Cₒ/S) was 0.045. The particles had an average diameter of 117 nm and a crystallite diameter of 6 nm.

### Comparative Example 1

An attempt was made to synthesize a silicon fine particle precursor by heating the same reaction cylinder as in Example 1 to 1000°C, and supplying trichlorosilane at the same rate as in Example 1. However, the reaction cylinder was clogged within 1 hour, and the production had to be stopped. Though the reaction rate of trichlorosilane was about 70%, the silicon fine particle precursor was not collected on the bag filter. Presumably, almost all of the produced silicon was deposited on the surface of the reaction cylinder, and fine particles were not obtained.

### Comparative Example 2

An attempt was made to synthesize a silicon fine particle precursor by heating the same reaction cylinder as in Example 1 to 550°C, and supplying trichlorosilane at the same rate as in Example 1. However, the reaction rate of trichlorosilane was less than 10%, and the silicon fine particle precursor was not collected on the bag filter at all.

### Comparative Example 3

The silicon fine particle precursor obtained according to the synthesis of the silicon fine particle precursor in Example 1 was supplied to a graphite heating crucible whose atmosphere has been replaced with nitrogen while being careful to prevent the silicon fine particle precursor from coming into contact with the atmosphere. The graphite container was heated to 950°C while flowing an appropriate amount of nitrogen inside this graphite container. Immediately after reaching 950°C, heating was stopped and natural cooling was performed.

After cooling, the heating crucible was opened to the atmosphere, and silicon fine particles were taken out from the inside. The obtained fine particles had an oxygen concentration (Cₒ) of 0.8% by mass, a chlorine concentration of 1.5% by mass, and a specific surface area (S) of 17 m²/g. The ratio of oxygen concentration to specific surface area (Cₒ/S) was 0.047. The particles had an average diameter of 151 nm, and a crystallite diameter of 18 nm, which was more than the crystallite diameter range (less than 10 nm) aimed by the present invention.

### Comparative Example 4

The silicon fine particle precursor obtained according to the synthesis of the silicon fine particle precursor in Example 1 was supplied to a graphite heating crucible whose atmosphere has been replaced with nitrogen while being careful to prevent the silicon fine particle precursor from coming into contact with the atmosphere. The graphite container was heated to 700°C while flowing an appropriate amount of nitrogen inside this graphite container. Immediately after reaching 700°C, heating was stopped and natural cooling was performed.

After cooling, the heating crucible was opened to the atmosphere, and silicon fine particles were taken out from the inside. The obtained silicon fine particles reacted with moisture in the air, and had an odor of hydrogen chloride gas. The silicon fine particles had an oxygen concentration (Cₒ) of 3.0% by mass, a chlorine concentration of 4.9% by mass, and a specific surface area (S) of 25 m²/g. The ratio of oxygen concentration to specific surface area (Cₒ/S) was 0.120. The particles had an average diameter of 103 nm and a crystallite diameter of 4 nm. Examples of evaluation as a battery material are shown below.

### Experimental Example 1

Using the silicon fine particles obtained in Example 1 as an active material, an active material, a conductive aid (acetylene black), and a binder (polyimide) were kneaded in a weight ratio of active material: conductive aid (acetylene black): binder (polyimide) of 7:1:2, and NMP solvent was added to obtain a paste having a viscosity of 0.8 to 1.5 Pa·S. This paste was applied over a current collector (copper foil), dried, pressed, and then heated under nitrogen flow at 350°C for 0.5 h to obtain a negative electrode sheet. Using this negative electrode sheet as a negative electrode, a lithium foil as a positive electrode, and an electrolyte to which vinylene carbonate and fluoroethylene carbonate were added at 10 vol% each, a half cell was prepared, and a cycle test was performed at a charge and discharge rate of 0.05 C. As a result, the half cell showed a high charge capacity of 2,300 mAh/g or more even after 50 cycles.

### Experimental Example 2

Using the silicon fine particles obtained in Comparative Example 4 as an active material, a half cell was prepared in the same manner as in Experimental Example 1, and a charge and discharge test was performed. As a result, the charge capacity after 50 cycles was about 1,800 mAh/g, which was inferior to that in Experimental Example 1.

### Experimental Example 3

Using crushed silicon fine particles having an average diameter of 5 pm (5,000 nm) as an active material, a half cell was prepared in the same manner as in Experimental Example 1, and a charge and discharge test was performed. As a result, the charge capacity after 50 cycles was about 200 mAh/g. The charge capacity was significantly reduced.

## Claims

1. Silicon fine particles that have
an average diameter of primary particles of 30 to 900 nm;
a crystallite diameter of less than 10 nm;
a chlorine concentration of 1 to 10% by mass; and
a ratio (Cₒ/S) of an oxygen concentration (Cₒ: % by mass) to a specific surface area (S: m²/g) of less than 0.05.

2. A method for producing silicon fine particles, comprising: heating a gas containing trichlorosilane to a temperature of 600 to 950°C in a reactor and thermally decomposing the trichlorosilane to produce a silicon fine particle precursor containing chlorine, then collecting the silicon fine particle precursor, and then heating and dechlorinating the collected silicon fine particle precursor at a temperature of 750 to 900°C under supply of an inert gas or under reduced pressure.

3. The method for producing silicon fine particles according to claim 2, wherein unreacted trichlorosilane and silicon tetrachloride are recovered from a separated reaction exhaust gas when the silicon fine particle precursor is collected, the silicon tetrachloride is reacted with metallic silicon and hydrogen to be converted into trichlorosilane, and used as a reaction raw material.

4. The method for producing silicon fine particles according to claim 2 or 3, wherein unreacted trichlorosilane is separated and recovered from a reaction exhaust gas by distillation, and used as a reaction raw material.
